(19) Europäisches Patentamt
European Patent Office
Office européen des brevets

(11) **EP 4 160 541 A1**

(12) **EUROPEAN PATENT APPLICATION**

(43) Date of publication:
**05.04.2023 Bulletin 2023/14**

(51) International Patent Classification (IPC):
**G06T 13/80** $^{(2011.01)}$     **G06T 15/04** $^{(2011.01)}$

(21) Application number: **22199207.6**

(52) Cooperative Patent Classification (CPC):
**G06T 15/04; G06T 13/80**

(22) Date of filing: **30.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2021 DE 102021211162**

(71) Applicant: **GritWorld GmbH**
**60439 Frankfurt am Main (DE)**

(72) Inventor: **Wodniok, Dominik**
**60439 Frankfurt am Main (DE)**

(74) Representative: **Vossius & Partner**
**Patentanwälte Rechtsanwälte mbB**
**Siebertstraße 3**
**81675 München (DE)**

(54) **METHOD AND SYSTEM FOR VISUALIZATION AND SIMULATION OF FLOW PHENOMENA**

(57)    A computer implemented method of graphic image data processing for simulation of advection in a time step At, the method comprising: performing the simulation on a regular grid of indexed simulation points $\mathbf{x}_{i,j}$ in a world space, associating each simulation point with a texture coordinate $\mathbf{t}_{i,j}$ in a texture space of an advected texture $\boldsymbol{T}$, which represent visual details, associating each simulation point with a velocity $\mathbf{v}_{i,j}$ of a velocity field; calculating an advected texture in the texture space by

$$\mathbf{t}'_{i,j} = \mathbf{t}_{i,j} - \Delta t \cdot \mu(\mathbf{v}_{i,j})$$ , with $\mu$ being a world-space-to-texture-space-transform $\mu$.

# Fig. 1

EP 4 160 541 A1

**Description**

The present disclosure relates to a method and system for visualization and/or simulation of flow phenomena.

The present disclosure allows to visualize flow phenomena due to advection of a texture from a temporally varying velocity field on a simulation grid. Additionally, artistic control of strain and curl is provided.

Naive texture advection produces heavy distortions during a simulation. Documents [1] and [2] handle this by regenerating texture coordinates after some time. Document [1] does this by advecting two sets of texture coordinates which are reset in an interleaved fashion after a fixed time interval. The texture is looked up for both sets and the results are faded in and out. The blending can result in ghosting artifacts and is clearly visible when the time interval is too short. Longer intervals still cause a globally visible loss in contrast.

Those flaws are not acceptable for many applications. Document [2] adaptively regenerates texture coordinates per simulation grid point, however, this is already too expensive for small grid sizes.

In contrast the method and system according to the present disclosure does not require any coordinate regeneration. Further, neither [1] nor [2] provides artistic control over strain and curl.

The above objectives are achieved by the features of the subject-matter of the appended independent claims. The dependent claims relate to further aspects of the disclosure.

The present disclosure relates to a computer implemented method of graphic image data processing for simulation of advection in a time step $\Delta t$, the method comprising:

performing the simulation on a regular grid of indexed simulation points $\mathbf{x}_{i,j}$ in a world space;
associating each simulation point with a texture coordinate $\mathbf{t}_{i,j}$ in a texture space of an advected texture $T$, which represent visual details;
associating each simulation point with a velocity $\mathbf{v}_{i,j}$ of a velocity field; and
calculating an advected texture in the texture space by

$$\mathbf{t}'_{i,j} = \mathbf{t}_{i,j} - \Delta t \cdot \mu(\mathbf{v}_{i,j}),$$

with $\mu$ being a world-space-to-texture-space-transform $\mu$.

The present disclosure further relates to a computer implemented method of graphic image data processing for visualization of flow phenomena, the method comprising:

performing the visualization on a regular grid of indexed simulation points $\mathbf{x}_{i,j}$ in a world space;
associating each simulation point with a texture coordinate $\mathbf{t}_{i,j}$ in a texture space of an advected texture $T$, which represent visual details,
wherein the calculating the visualization for a point $\mathbf{x}$ of a simulation domain, comprises: calculating an interpolation of the texture coordinates $\mathbf{t}_{i,j}$ of the simulation points belonging to a cell of indexed simulation points $\mathbf{x}_{i,j}$, in which $\mathbf{x}$ is contained in, based on a world-space-to-texture-space-transform $\mu$;
sampling the texture $T$ at the interpolated texture coordinates to obtain texture samples; and blending the texture samples to a single value for the point $\mathbf{x}$.

The present disclosure further relates to a computer implemented method of graphic image data processing for simulation and visualization of flow phenomena, wherein the steps of the method according to appended claim 1 and the method according to appended claim 2 are iterated using the same world space points $\mathbf{x}_{i,j}$, texture space points $\mathbf{t}_{i,j}$, and world-space-to-texture-space-transform $\mu$.

Various embodiments may preferably implement the following features:
It is a further preferable aspect of the present disclosure in order to transform points $\mathbf{x}$ in the world space to points $\mathbf{t}$ in the texture space, the texture $T$ is assigned to the world space extent $L_T$, and the world-space-to-texture-space-transform is a linear map.

It is a further preferable aspect of the present disclosure that the velocity field is stored or is defined as a function in the world space.

It is a further preferable aspect of the present disclosure that in the simulation the movement in the texture space is adjusted by scales $s_{i,j}$ and after an advection step the new texture coordinate $\mathbf{t}'_{i,j}$ at $\mathbf{x}_{ij}$ is

$$\mathbf{t}'_{i,j} = \mathbf{t}_{i,j} - \Delta t \cdot s_{i,j}^{\text{tex}} \cdot \mu\big(\mathbf{v}_{i,j}\big),$$

wherein relative to the texture $T$ scales by $s_{i,j}$ in world space corresponds to scaling in the texture space by

$$s_{i,j}^{\text{tex}} = \frac{1}{s_{i,j}}.$$

It is a further preferable aspect of the present disclosure that in the simulation the movement in the texture space is adjusted by rotation angles $r_{i,j}$.

It is a further preferable aspect of the present disclosure that in the simulation the movement in the texture space is adjusted by isotropic local strain $e_{i,j}$

It is a further preferable aspect of the present disclosure that during the iteration updates for at least one of $s_{i,j}$, $r_{i,j}$, and $e_{i,j}$ are derived from the velocity field.

The present disclosure further relates to a data processing device comprising a processor configured to carry out the method as described herein.

The present disclosure further relates to a computer program comprising instructions which, when the program is executed by a computer, cause the computer to carry out the method as described herein.

The present disclosure further relates to a computer-readable medium comprising instructions which, when executed by a computer, cause the computer to carry out the method as described herein.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

It is noted that in this description the math typesetting rules defined in the IEEE math typesetting guide [3] are used, unless indicated otherwise or being obvious to the skilled person. For example, vectors are set in bold type. Additionally, matrices are in bold type as well.

**Brief description of the drawings**

The above-described objects, advantages and features of the present disclosure, as well as others, will be more readily understood from the following detailed description of certain preferred embodiments of the disclosure, when considered in conjunction with the accompanying drawings in which:

Fig. 1      shows a depiction of the grid configuration according to an embodiment of the disclosure;

Fig. 2a     shows rendering of an advected texture with a triangulated quad of the simulation surface with standard texture lookups;

Fig. 2b     shows that triangle connectivity directly translates to the texture coordinate space and the advected texture lookup can produce distortions;

Fig. 3      shows a depiction of a simulation surface and the projection of a shading point to a simulation domain point **x** according to an embodiment of the disclosure;

Fig 4a      shows a shading point **x** and the grid point positions of the square shaped cell **x** is contained;

Fig 4b      shows exemplary texture space mappings of the influence regions of all cell corners;

Fig. 5a     shows a rendering of an advected texture with a triangulated quad of the simulation surface with decoupled texture lookups according to an embodiment of the disclosure;

Fig. 5b     shows sections in the advected texture space according to an embodiment of the disclosure; and

Fig. 6 shows an overview of simulation and rendering with texture particles according to an embodiment of the disclosure.

**Detailed Description of the Figures**

In the following, embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

*Initial definitions*

Throughout this disclosure simulations on 2-dimensional grids are considered, in particular regular grids in the $\mathbb{R}^2$ plane with $n \in \mathbb{N}$ equally spaced points in x-direction and $m \in \mathbb{N}$ equally spaced points in y-direction are considered, giving a total of $n \times m$ simulation points $\mathbf{x} \in \mathbb{R}^2$. Preferably the grid is cartesian and the spacing in x-direction and y-direction is identical. However, the scope of disclosure is not limited thereto and encompasses also higher dimensions, because the method remains essentially the same.

In an embodiment of the disclosure, the simulation points are indexed with index pairs $(i,j) \in G$ from a grid index set $G = \{0, ..., n - 1\} \times \{0, ..., m - 1\}$. For improved intelligibility this disclosure focuses on cartesian grids. Given a grid spacing $\Delta x \in \mathbb{R}_+$ each grid point $(i,j) \in G$ is assigned an equally spaced world space position $\mathbf{x}_{i,j} \in \mathbb{R}^2$, which may be computed from the respective grid indices as the product of the indices with the grid spacing:

$$\mathbf{x}_{i,j} = (i \cdot \Delta x, j \cdot \Delta x). \qquad (1)$$

In an embodiment of the disclosure, in the context of rendering height field fluid simulations, a position $\mathbf{x}_{i,j}$ can also have a third component, which represents height. In this case the method remains essentially the same.

In an embodiment of the disclosure, the total world space extent of the grid in x- and y-direction is $L_x = (n - 1)\Delta x$ and $L_y = (m - 1)\Delta x$. This allows to define the simulation domain as the set $D = [0, L_x] \times [0, L_y]$.

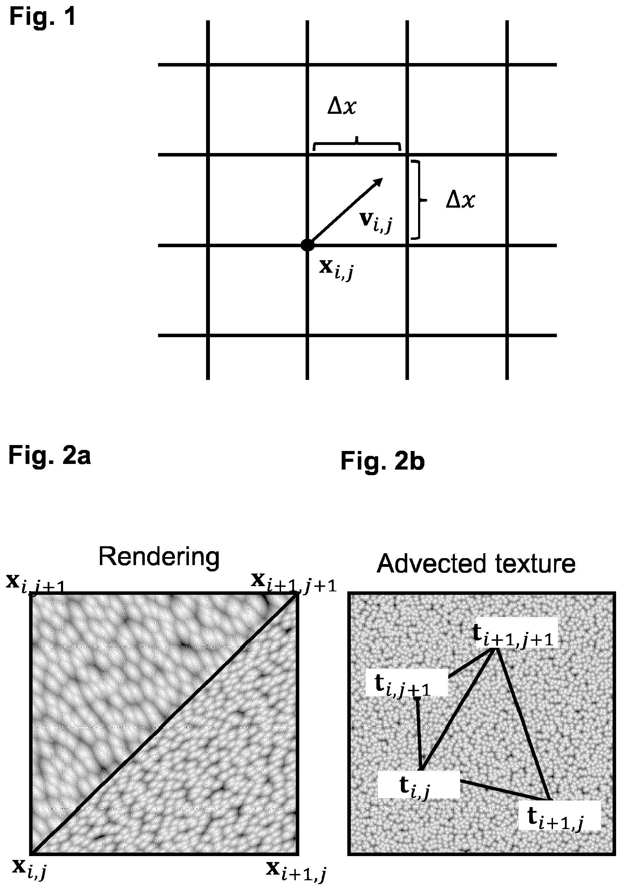

In an embodiment of the disclosure, each simulation point is associated with a velocity $\mathbf{v}_{i,j} \in \mathbb{R}^2$ in the same space as the simulation point $\mathbf{x}_{i,j}$ which may be constant or temporally varying as for example in case of a fluid simulation. The grid of velocities defines a velocity field. The velocity field $\mathbf{v}_{i,j}$ may be stored in an explicit form or may be a derived quantity based on the grid indices. The velocity field may be defined as a function based on the simulation point. Figure 1 shows a depiction of the grid configuration. In detail, a depiction of a grid point $\mathbf{x}_{i,j}$ with its velocity $\mathbf{v}_{i,j}$ for a grid with spacing $\Delta x$.

For the purpose of visualization of a flow each simulation point also has a texture coordinate $\mathbf{t}_{i,j} \in \mathbb{R}^2$, which resides in the texture space of a texture, which is hereinafter called the advected texture and denoted $T$. The texture $T$ may represent visual details such as foam, detail surface normals, or detail surface displacements. For improving intelligibility only, it is assumed that the textures are of square shape.

In an embodiment of the disclosure, coordinates in texture space are parametrized with normalized texture coordinates in $[0,1]^2$. Coordinates outside of this range are simply wrapped around.

*Visualization*

The visualization process has as an input the simulation points $\mathbf{x}_{i,j}$ and texture coordinates $\mathbf{t}_{i,j}$. It is not necessary for the visualization that the input is from any kind of simulation. It may be carried out after any number of simulation steps. In turn the simulation does not rely on the visualization process.

In an embodiment of the disclosure, for the visualization process, the grid is interpreted as a rectangular grid of quadrangles with vertices, which correspond to the simulation points $\mathbf{x}_{i,j}$, see Equation 1, in the $\mathbb{R}^2$ plane with an optional height coordinate in case of 3D rendering.

The quadrangles themselves might be triangulated. For the use of a rasterizer or ray tracer it may be necessary to be able to compute shading values not just at simulation points $\mathbf{x}_{i,j}$, but for all shading points $\mathbf{x} \in D$ of the simulation domain $D = [0, L_x] \times [0, L_y]$.

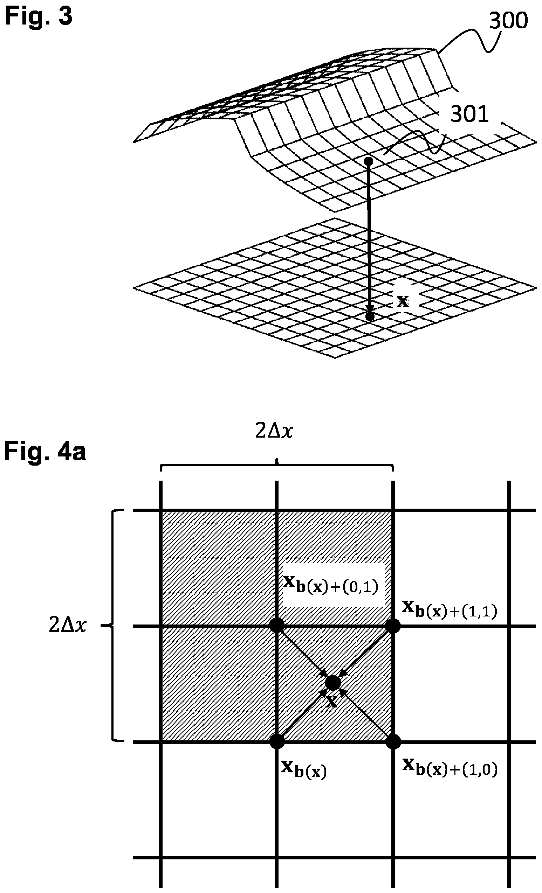

Figure 3 shows a depiction of a simulation surface 300 and the projection of a shading point 301 to a simulation domain point $\mathbf{x}$. The exact shading calculations are not relevant in context of this disclosure. The only prerequisite of the disclosure is that the shading calculation involves evaluating the advected texture $T$. This evaluation can be described as a function

$$f : D \rightarrow I,$$

which is mapping shading points in the simulation domain $D$ to values of some target set $I$ which includes texel values of the advected texture $T$.

A straightforward definition of $f$ is standard texture mapping. With respect to a shading point $\mathbf{x} \in D$ it first interpolates the texture coordinates $\mathbf{t}_{i,j}$ of the simulation points belonging to the quadrangle or triangle in which $\mathbf{x}$ is contained in.

In an embodiment of the disclosure, in a second step, said interpolated coordinate is used to sample the texture $T$. The connectivity of the quadrangle or its triangulation directly translates to the texture coordinate space. During a simulation this can lead to strong distortions over time as demonstrated in Figure 2.

Fig. 2a shows, rendering of an advected texture with a triangulated quad of the simulation surface with standard texture lookups. Each simulation point $\mathbf{x}_{ij}$ has texture coordinates $\mathbf{t}_{ij}$, which get interpolated across the triangles. Fig. 2b shows that triangle connectivity directly translates to the texture coordinate space and the advected texture lookup may produce distortions.

Reference documents [1] and [2] use texture coordinate regeneration techniques to alleviate such distortions. This requires maintaining multiple texture coordinate sets which have to be simulated. Standard texture mapping is performed for each coordinate set and the results are blended in a way which attempts to hide distortion.

*Decoupled Texturing*

In an embodiment of the disclosure, in order to completely remove excessive distortion, the present disclosure does not use simple interpolation. Instead, according to the present disclosure the interpolation of shading values is locally decoupled from the connectivity of the rendering primitives.

To this end, each grid index $(i,j)$ is influencing $f(\mathbf{x})$ for a shading point $\mathbf{x} = (x,y) \in D$ in the square region $s_{i,j} = [x_{i,j} - \Delta x, x_{i,j} + \Delta x] \times [y_{i,j} - \Delta x, y_{i,j} + \Delta x]$ of width $2\Delta x$ centered on the grid point position $\mathbf{x}_{i,j} = (x_{i,j}, y_{i,j})$.

Each region $s_{i,j}$ is mapped to a section of the advected texture via an affine transformation $\tau_{i,j}$ that applies a different texture space scaling $s_{i,j}^{\mathrm{tex}} > 0$, rotation matrix $\mathbf{R}_{i,j}^{tex} \in \mathbb{R}^{2 \times 2}$, and translation by the texture coordinate $\mathbf{t}_{i,j}$ for each grid point $(i,j)$. The scale and rotation are optional. Later it is described how a simulation can optionally provide those values to improve the perception of flow from fluid stretching and rotation due to vortices.

In an embodiment of the disclosure, for the shading point $\mathbf{x}$ the transformation $\tau_{i,j}$ first computes the offset vector $\mathbf{o} = \mathbf{x} - \mathbf{x}_{i,j}$ from $\mathbf{x}_{i,j}$ to $\mathbf{x}$. This offset must be transformed into texture space. This requires relating the world space to texture space.

To transform points $\mathbf{x}$ in the world space to points t in the texture space the texture $T$ is assigned to the world space extent $L_T \in \mathbb{R}_+$, which enables to define this transformation as a simple linear map:

$$\mu : \mathbb{R}^2 \rightarrow \mathbb{R}^2 : \mathbf{x} \rightarrow \frac{1}{L_T} \cdot \mathbf{x}. \qquad (2)$$

Using the linear map $\mu$ the offset $\mathbf{o}$ is transformed to the texture space offset $\mu(\mathbf{o}) = \frac{1}{L_T} \cdot (\mathbf{x} - \mathbf{x}_{i,j})$. Then the rotation, scale, and translation are applied. This results in the texture section transformation

$$\tau_{i,j}: S_{i,j} \to \mathbb{R}^2 : \mathbf{x} \to \frac{1}{L_T} \cdot s_{i,j}^{tex} \cdot \mathbf{R}_{i,j}^{tex} \cdot \left(\mathbf{x} - \mathbf{x}_{i,j}\right) + t_{i,j}, \qquad (3)$$

which maps the square region $s_{i,j}$ of width $2\Delta x$ around $\mathbf{x}_{i,j}$ to a rotated square texture section of width $2s_{i,j}\Delta x/L_T$ around the texture coordinate $\mathbf{t}_{i,j}$.

In an embodiment of the disclosure, for visualization of flow phenomena, $s_{i,j}^{tex}$, $\mathbf{R}_{i,j}^{tex}$, and $\mathbf{t}_{i,j}$ are driven by a fluid simulation, where $s_{i,j}^{tex}$ and $\mathbf{R}_{i,j}^{tex}$ are optional. The corresponding computations will be described below.

To compute $f(\mathbf{x})$ for shading points $\mathbf{x} = (x,y) \in D$ square shaped cells defined by grid point positions $\mathbf{x}_{i,j}$, $\mathbf{x}_{i+1,j}$, $\mathbf{x}_{i,j+1}$, and $\mathbf{x}_{i+1,j+1}$ are operated on. Such a cell contains a continuous set of points in the region $[i\Delta x, i\Delta x + \Delta x] \times [j\Delta x, j\Delta x + \Delta x]$.

This region is overlapped by the four regions $S_{i,j}$, $S_{i+1,j}$, $S_{i,j+1}$, and $S_{i+1,j+1}$ and their associated texture sections. The evaluation of $f(\mathbf{x})$ is defined as a blend of four samples taken from the four texture sections.

In an embodiment of the disclosure, as a first step of evaluating $f(\mathbf{x})$ the base grid indices are determined for the cell in which $\mathbf{x}$ is contained in, in order to identify the relevant texture sections. This can be derived from the inversion of Equation 1.

To this end, first the components of $\mathbf{x} = (x, y)$ are divided by the grid spacing $\Delta x$ to yield the point $\mathbf{x}' = (x',y') = (x/\Delta x, y/\Delta x)$. This point is in a continuous variant $G' = [0, ..., n - 1] \times [0, ..., m - 1]$ of the discrete grid index coordinate set $G = \{0, ..., n - 1\} \times \{0, ..., m - 1\}$.

From $\mathbf{x}'$ the base grid point index pair $\mathbf{b}$ may be computed for the cell containing $\mathbf{x}$ by rounding down its components. Thus, the base index pair is $\mathbf{b}(\mathbf{x}) = (\lfloor x/\Delta x \rfloor, \lfloor y/\Delta x \rfloor) = (i,j)$. Let $\sigma(\mathbf{t})$ denote the function, which samples the advected texture at normalized texture coordinate $\mathbf{t} \in \mathbb{R}^2$ with coordinate wrap around for coordinates outside of $[0,1]^2$.

Then, combined with the texture section transform $\tau$ defined in Equation 3, the function $v$ may be defined, which samples the texture section of the grid point with index pair $\mathbf{i} = (i,j) \in G$ as

$$v(\mathbf{x}, \mathbf{i}) = \sigma\left(\tau_i(\mathbf{x})\right). \qquad (4)$$

In an embodiment of the disclosure, given the base grid index $\mathbf{b}(\mathbf{x})$ of the shading point $\mathbf{x}$ now the texture section samples may be obtained for the relevant cell grid points with indices $\mathbf{i} \in \{\mathbf{b}(\mathbf{x}), \mathbf{b}(\mathbf{x}) + (1,0), \mathbf{b}(\mathbf{x}) + (0,1), \mathbf{b}(\mathbf{x}) + (1,1)\}$.

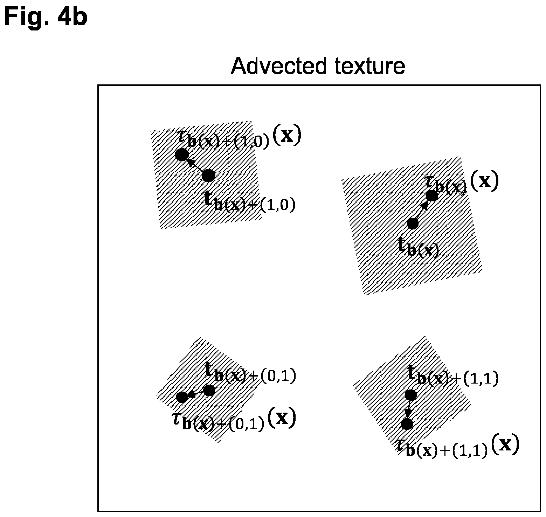

Fig. 4 depicts the relationship of the base grid index, influence regions, and texture section transformations for a shading point x.

Fig. 4a shows a shading point $\mathbf{x}$ and the grid point positions of the square shaped cell $\mathbf{x}$ is contained. The points are indexd with resepect to the base grid point index b ($\mathbf{x}$) computed from $\mathbf{x}$. The influence region $S_{\mathbf{b}(\mathbf{x})+(0,1)}$ of grid point $\mathbf{b}(\mathbf{x}) + (0,1)$ is highlighted as a pattern. In Fig. 4b exemplary texture space mappings of the influence regions of all cell corners are depicted as a pattern. The transformation of the offsets to the shading point $\mathbf{x}$ using the texture section transform $\tau$ of each corner is depicted as well.

In an embodiment of the disclosure, is the last step is to blend the samples depending on x. To this end they are combined as a convex combination to a single value, while also ensuring continuity between cells. For this a weighting function $\omega(\mathbf{x}, \mathbf{i}) = h(\mathbf{x} - \mathbf{x}_{\mathbf{i}})$ is defined with shading point $\mathbf{x} \in D$ and grid point index pair $\mathbf{i} = (i,j) \in G$ as arguments, which passes the difference $\mathbf{x} - \mathbf{x}_{\mathbf{i}}$ to another function $h: \mathbb{R}^2 \to [0,1]$.

That is, $\omega$ associates each grid point with a shifted version of h centered on the simulation point. The function $h$ has the property $h(\mathbf{0}) = 1$ and $h(\mathbf{x} - \mathbf{x}_{\mathbf{i}}) = 0$ for all $\mathbf{x}$ where $||\mathbf{x} - \mathbf{x}_{\mathbf{i}}||_\infty \geq \Delta x$. The second property enforces a square shaped support of width $2\Delta x$ of the regions $s_{i,j}$ associated with simulation points.

In an embodiment of the disclosure, to be an actual convex combination, weighting functions must never return negative values and sum to one for all $\mathbf{x} = (x, y) \in D$ overlapping their support. Therefore, polynomial tensor product splines are used, which have the following form

$$h(\mathbf{x}) = p\left(\frac{|x|}{\Delta x}\right) \cdot p\left(\frac{|y|}{\Delta x}\right) \qquad (5)$$

for the weighting function, where $p(t)$ is a univariate polynomial which is monotonically decreasing on $t \in [0,1]$ and takes the values $p(0) = 1$ and $p(1) = 0$.

In an embodiment of the disclosure, for control of the visual appearance, one may choose between linear, cubic, and quintic polynomials to get bi-linear, bi-cubic, and bi-quintic interpolation with $C_0$, $C_1$, and $C_2$ continuity across cell borders. The corresponding polynomials are $p(t) = 1 - t$, $p(t) = 1 + 2t^3 - 3t^2$, and $p(t) = 1 - 6t^5 + 15t^4 - 10t^3$. The cubic polynomial has zero first derivatives at $t = 0$ and $t = 1$, while the quintic polynomial additionally has zero second derivatives at those points.

Combining the texture section samples computed with $v$ from Equation 4 and the weighting function $\omega$, the full definition of $f(\mathbf{x})$ is

$$f(\mathbf{x}) = \sum_{\mathbf{o} \in \{(0,0),(1,0),(0,1),(1,1)\}} \omega(\mathbf{x}, \mathbf{b}(\mathbf{x}) + \mathbf{o}) \cdot v(\mathbf{x}, \mathbf{b}(\mathbf{x}) + \mathbf{o}). \qquad (6)$$

It computes the sum of the product of $v$ and $\omega$ evaluated for the shading point $\mathbf{x} \in D$ for the four grid points of the cell containing $\mathbf{x}$ with base grid point index $\mathbf{b}(\mathbf{x})$.

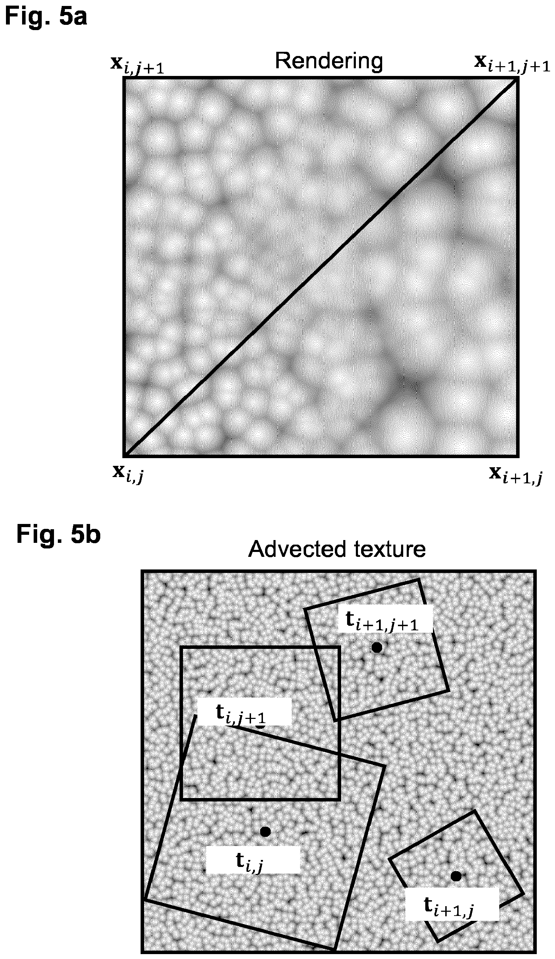

An exemplary decoupled texturing result is depicted in Figure 5. Figure 5a shows a rendering of an advected texture with a triangulated quad of the simulation surface with decoupled texture lookups. Each grid point $\mathbf{x}_{i,j}$ stores rotations $r_{i,j}$ and scales $s_{i,j}$ in addition to texture coordinates $\mathbf{t}_{i,j}$ which altogether define sections in the advected texture space, which is shown in Fig. 5b. This enables our undistorted decoupled advection texture lookup. The $C_2$ continuous weighting function based on the quintic polynomial is used for blending

*Simulation*

The simulation can be carried out independent of the visualization process. It is not required to visualize the state of the simulation after any simulation step. Each simulation step advances the simulation state for a time step $\Delta t \geq 0$, which is allowed to vary in each step.

In an embodiment of the disclosure, in order to obtain a flow phenomena visualization translation, scale and rotation parameters of texture sections may be simulated along with the fluid simulation. Of the three parameters only translation is essential, while the scale and rotation can improve the visualization. To this end the texture sections travel through the texture undergoing rotation as well as compression and expansion.

The simulation does not directly simulate the texture space section scale $s_{i,j}^{tex}$ and rotation matrix $\mathbf{R}_{i,j}^{tex}$ used in the texture section transform, cf. Equation 3. Instead, it works on a world space scale $s_{i,j} \in \mathbb{R}$ and rotation angle $r_{i,j} \in \mathbb{R}$ for each grid point, which are converted to $s_{i,j}^{tex}$ and $\mathbf{R}_{i,j}^{tex}$ for visualization.

In an embodiment of the disclosure, relative to the texture T, scaling by $s_{i,j}$ in world space corresponds to scaling by

$$s_{i,j}^{tex} = \frac{1}{s_{i,j}} \qquad (7)$$

in texture space.

In an embodiment of the disclosure, also relative to the texture, rotating by $r_{i,j}$ in world space requires to rotate in the opposite direction in texture space. Thus, $\mathbf{R}_{i,j}^{tex}$ can be compute from $r_{i,j}$ as

$$\mathbf{R}_{i,j}^{tex} = \begin{pmatrix} cos(-r_{i,j}) & sin(-r_{i,j}) \\ -sin(-r_{i,j}) & cos(-r_{i,j}) \end{pmatrix}. \qquad (8)$$

In an embodiment of the disclosure, the changes in $s_{i,j}$, $r_{i,j}$, and $t_{i,j}$ are derived from the velocity field. When performing an advection step of the simulation with a time step $\Delta t$ texture section s, hereinafter also referred to as particles, advect with the velocity field causing a change in their texture coordinate $t_{i,j}$.

In an embodiment of the disclosure, locally at a simulation point $\mathbf{x}_{i,j}$ with velocity $\mathbf{v}_{i,j}$ the fluid must visually appear as to move by an offset of $\Delta t \cdot \mathbf{v}_{i,j}$, which is the product of the time step $\Delta t$ with the velocity vector $\mathbf{v}_{i,j}$. Relative to the advected texture this corresponds to an opposite movement of $-\Delta t \cdot \mu(\mathbf{v}_{i,j})$ in texture space, where $\mu$ is the texture space transform from Equation 2.

In an embodiment of the disclosure, this movement may be adjusted for the current scale $s_{i,j}$ of the particle by multiplying with $s_{i,j}^{\text{tex}}$. Thus, after an advection step the new texture coordinate $\mathbf{t}'_{i,j}$ at $\mathbf{x}_{ij}$ is

$$\mathbf{t}'_{i,j} = \mathbf{t}_{i,j} - \Delta t \cdot s_{i,j}^{tex} \cdot \mu(\mathbf{v}_{i,j}). \tag{9}$$

In an embodiment of the disclosure, at simulation initialization the texture coordinates $\mathbf{t}_{i,j}$ can be initialized with random values or with the associated simulation point positions $\mathbf{x}_{i,j}$ mapped to the texture space position $\mu(\mathbf{x}_{i,j})$ using the texture space transform $\mu$.

The described texture coordinate advection update is different from previous approaches as it does not depend on texture coordinates from any neighboring simulation grid values.

As rendering is locally decoupled from neighboring grid points this also means that distortions from stretching and local vortices does not occur. As a result, no special measures like texture coordinate regeneration as needed in [1] or [2], need to be performed.

In an embodiment of the disclosure, stretching and rotation from vortices can improve the perception of flow if not too excessive. Thus, locally both effects may be reintroduced using the available texture section rotation angles $r_{i,j}$ and scales $s_{i,j}$. The decomposition of flow into those additional parameters also allows for additional control of the visual appearance.

Initially, grid point rotation angles $r_{i,j}$ can just be set to zero or randomly selected values. Each time step the rotation using the curl of the velocity field may be updated. The curl of the 2-dimensional velocity field $\mathbf{v}_{i,j} = (u_{i,j}, w_{i,j})$ at $\mathbf{x}_{i,j}$ is

$$\text{curl } \mathbf{v}_{i,j} = \frac{\partial w_{i,j}}{\partial x} - \frac{\partial u_{i,j}}{\partial y}. \tag{10}$$

In an embodiment of the disclosure, the curl is related to the local angular velocity $\omega_{i,j} \in \mathbb{R}$ by $\omega_{i,j} = \frac{1}{2}$ curl $\mathbf{v}_{i,j}$. Integrating over a simulation time step $\Delta t$ the local rotation angle change $\Delta r_{i,j} \in \mathbb{R}$ is the product of $\Delta t$ with the angular velocity $\omega_{i,j}$:

$$\Delta r_{i,j} = \Delta t \cdot \omega_{i,j} \cdot \lambda^{\text{curl}}. \tag{11}$$

The additional factor $\lambda^{\text{curl}} \in [0,1]$ is a parameter for controlling the influence of curl on the simulation result. The new rotation $r'_{i,j}$ at $\mathbf{x}_{i,j}$ is obtained by adding the change in rotation $\Delta r_{i,j}$ to the current rotation $r_{i,j}$:

$$r'_{i,j} = r_{i,j} + \Delta r_{i,j}. \tag{12}$$

In an embodiment of the disclosure, to capture local stretch and compression of the advected texture from a spatially varying velocity field, additionally the current isotropic local strain $e_{i,j} \in \mathbb{R}$ may be stored at each grid point.

The local scale $s_{i,j}$ is derived from the strain $e_{i,j}$. For a grid spacing of $\Delta x$ the actual local deformation in world space is $e_{i,j}\Delta x$.

Relative to the grid spacing this corresponds to an isotropic scaling of

$$s_{i,j} = \frac{\Delta x + e_{i,j}\,\Delta x}{\Delta x} = 1 + e_{i,j}. \qquad (13)$$

The rate of deformation or strain from a velocity field at a grid point $(i,j)$ is described by the strain rate tensor

$$\mathbf{E}_{i,j} = \tfrac{1}{2}\left(\mathbf{J}_{i,j} + \mathbf{J}_{i,j}^{T}\right) \in \mathbb{R}^{2\times 2}$$

. Here, $\mathbf{J}_{i,j} \in \mathbb{R}^{2\times 2}$ is the Jacobian

$$\mathbf{J}_{ij} = \begin{pmatrix} \dfrac{\partial u_{i,j}}{\partial x} & \dfrac{\partial u_{i,j}}{\partial y} \\ \dfrac{\partial w_{i,j}}{\partial x} & \dfrac{\partial w_{i,j}}{\partial y} \end{pmatrix} \qquad (14)$$

of the local velocity field at the simulation point.

The strain rate tensor $\mathbf{E}_{i,j}$ may be split into an isotropic strain rate and a shear rate tensor. For the purposes of the disclosure only isotropic deformation is of interest. Thus, only the isotropic strain rate $d_{i,j} \in \mathbb{R}$ needs to be computed for each grid point. That is half of the trace of $\mathbf{E}_{i,j}$, which corresponds to half of the divergence of the velocity field:

$$d_{i,j} = \tfrac{1}{2}\mathrm{tr}\left(\mathbf{E}_{i,j}\right) = \tfrac{1}{2}\left(\frac{\partial u_{i,j}}{\partial x} + \frac{\partial w_{i,j}}{\partial y}\right) = \tfrac{1}{2}\,\mathrm{div}\,\mathbf{v}_{i,j}. \qquad (15)$$

The updated strain $e_{i,j}'$ is the sum of $e_{i,j}$ and the product of the simulation time step $\Delta t$ and the strain rate $d_{i,j}$:

$$e_{i,j}' = e_{i,j} + \Delta t \cdot d_{i,j} \cdot \lambda^{\mathrm{strain}}. \qquad (16)$$

The additional factor $\lambda^{\mathrm{strain}} \in [0,1]$ again is a further parameter for controlling the influence of strain on the simulation result. To avoid excessive compression and stretching also controllable stretching and compression factors $\lambda_{\mathrm{max}}^{\mathrm{stretch}} \geq 1$ and $\lambda_{\mathrm{max}}^{\mathrm{compression}} \geq 1$ may be specified.

In an embodiment of the disclosure, a stretch factor of $\lambda_{\mathrm{max}}^{\mathrm{stretch}}$ directly corresponds to a scale factor of $\lambda_{\mathrm{max}}^{\mathrm{stretch}}$. Combined with Equation 13 the upper strain bound $e^{\mathrm{max}}$ is

$$e^{\mathrm{max}} = \lambda_{\mathrm{max}}^{\mathrm{stretch}} - 1. \qquad (17)$$

A compression factor of $\lambda_{\mathrm{max}}^{\mathrm{compression}}$ corresponds to a scale factor of $1/\lambda_{\mathrm{max}}^{\mathrm{compression}}$. Thus, the lower strain bound $e^{\mathrm{min}}$ is

$$e^{\min} = \frac{1}{\lambda_{\max}^{\text{compression}}} - 1. \qquad\qquad (18)$$

In an embodiment of the disclosure, the local grid rotation $r_{i,j}$ and local grid strain $e_{i,j}$ may be advected with the advection scheme of the underlying fluid simulation.

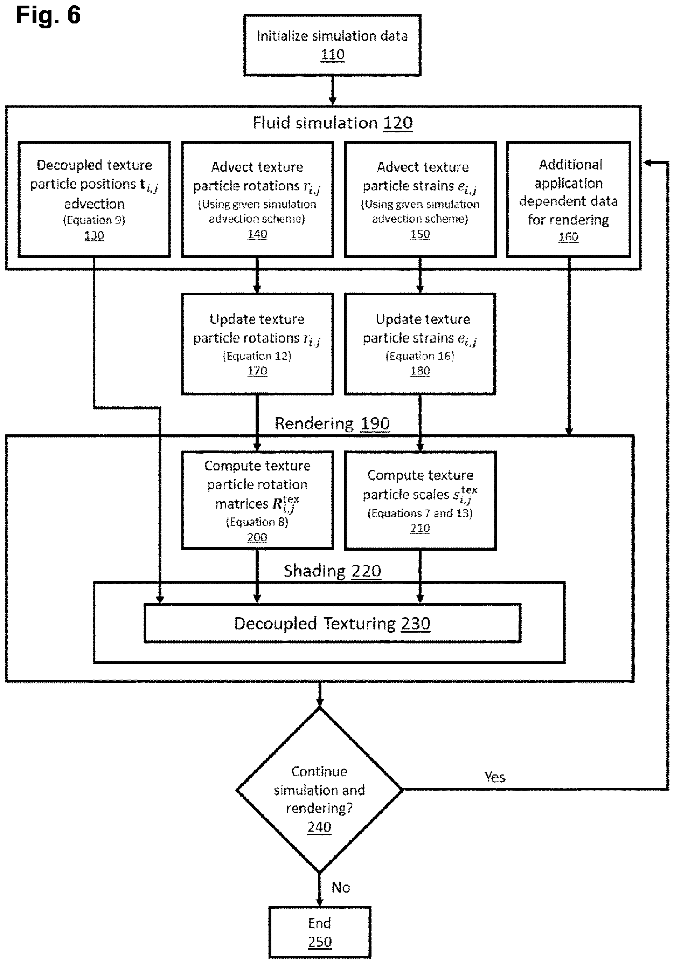

Fig. 6 shows an overview of simulation and rendering with texture particles according to an embodiment of the disclosure. At initialization step 110 the simulation 120 is initialized with all required data among which is the texture particle positions $\mathbf{t}_{i,j}$, rotations $r_{i,j}$, and strains $e_{i,j}$. At step 130 texture particle positions undergo decoupled advection as described in Equation 21. In steps 140 and 150 advection of the particle rotations and strains is performed with the advection scheme of simulation 120. Additional data required for rendering 190 such as a representation of the fluid surface may be generated at step 160.

After the simulation step 120 texture particle rotations and strains require updating. At step 170 particle rotations are updated using angular velocities derived from the curl of the velocity field of the simulation, cf. Equation 12. Step 180 updates particle strains using Equation 17 using strain rates, which are also derived from the velocity field of the simulation.

Rendering step 190 may visualize the fluid surface provided by 160 in two or three dimensions. To carry out decoupled texturing 230 during shading 220 it must be possible to project each surface point to be shaded to the two dimensional simulation grid in which also the texture particle data resides, cf. Figure 3.

Steps 200 and 210 compute texture particle scales and rotation matrices required for decoupled texturing from particle strains and rotation angles. This may be either done before or during shading using Equation 16. If desired simulation and rendering is continued at 240. Otherwise the process ends at 250.

*Pseudo code*

In the following, embodiments of the disclosure will be described in terms of pseudo code. It is noted that some aspects of any one of the described embodiments may also be found in some other embodiments unless otherwise stated or obvious. However, for increased intelligibility, each aspect will only be described in detail when first mentioned and any repeated description of the same aspect will be omitted. The presented code may be supplemented by the above disclosure and/or the corresponding Figures.

*1. Pseudo code for standard texturing:*

```
// Input parameters
// AdvectedTexture - the advected texture
// t - interpolated texture coordinate from simulation grid
generic evaluateStandardTexturing(in float2 t, in)
{
    return sample(AdvectedTexture, t);
}
```

*2. Pseudo code for decoupled texturing:*

```
/* Global variables */
// Δx - grid spacing
// SectionPositions - buffer with texture section positions
// SectionRotations - buffer with texture section rotation
matrices
// SectionScales - buffer with texture section scales
// AdvectedTexture - the advected texture
// L_T - size of the advected texture in world space

/* Helper functions */

// g - grid point index
float2 computeGridPointPosition(in int2 g)
{
    return float2(g) * Δx;
}

// x - 2d projected interpolated surface position
// g - grid point/texture section index
float2 textureSectionTransform(in float2 x, in int2 g)
{
    float2 d = x - computeGridPointPosition(g);
    float2 t = load(SectionPositions, g);
    float s = load(SectionScales, g);
```

```
        mat2x2 R = load(SectionRotations, g);
        return t + s / L_T * R * d;
}


// x - 2d projected interpolated surface position
// g - grid point/texture section index
float computeTextureSectionWeight(in float2 x, in int2 g)
{
        float2 d = x - computeGridPointPosition(g);
        // Compute the texture section weight with the tensor
product
        // Spline described in Equation 5.
        // The function p() is e.g. the quintic polynomial to get
        // C_2 continuous interpolation.
        return p(abs(d.x) / Δx) * p(abs(d.y) / Δx);
}


// x - 2d projected interpolated surface position
// b - base grid point index
float4 computeBlendWeights(in float2 x, in int2 b)
{
        return float4(
            computeTextureSectionWeight(x, b + (0, 0)),
            computeTextureSectionWeight(x, b + (1, 0)),
            computeTextureSectionWeight(x, b + (0, 1)),
            computeTextureSectionWeight(x, b + (1, 1)));
}


/* Main decoupled texturing function */
// Input parameters
// x - 2d projected interpolated surface position
generic evaluateDecoupledTexturing(in float2 x)
{
        // Compute base grid position with respect to x to identify
        // the texture sections we must blend
        int2 b = floor(x / Δx);

        // Compute texture section lookup positions
        float2 l_00 = textureSectionTransform(x, b + (0, 0));
        float2 l_10 = textureSectionTransform(x, b + (1, 0));
        float2 l_01 = textureSectionTransform(x, b + (0, 1));
        float2 l_11 = textureSectionTransform(x, b + (1, 1));

        // Decoupled sampling of rendering data texture for each
section
        generic v_00 = sample(AdvectedTexture, l_00);
        generic v_10 = sample(AdvectedTexture, l_10);
        generic v_01 = sample(AdvectedTexture, l_01);
```

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

```
generic v₁₁ = sample(AdvectedTexture, l₁₁);

// Compute blending weights for the texture section
samples
    float4 weights = computeBlendWeights (x, b);

// Return the weighted result
    return v₀₀ * blendWeights.x + v₁₀ * blendWeights.y +
        v₀₁ * blendWeights.z + v₁₁ * blendWeights.w;
}
```

Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system and/or device. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**References:**

[1] N. Max, B. Becker: Flow visualization using moving textures. Proceedings of Symposium on Visualizing Time Varying Data, 1996
[2] F. Neyret: Advected Textures, Proceedings of Symposium on Computer Animation, 2003
[3] IEEE Math Typesetting Guide, 2020, http://journals.ieeeauthorcenter.ieee.org/wp-content/uploads/sites/7/IEEE-Math-Typesetting-Guide.pdf

**Claims**

1. A computer implemented method of graphic image data processing for simulation of advection in a time step $\Delta t$, the method comprising:

   performing the simulation on a regular grid of indexed simulation points $\mathbf{x}_{i,j}$ in a world space;
   associating each simulation point with a texture coordinate $\mathbf{t}_{i,j}$ in a texture space of an advected texture T, which represent visual details;
   associating each simulation point with a velocity $\mathbf{v}_{i,j}$ of a velocity field; and
   calculating an advected texture in the texture space by

$$\mathbf{t}'_{i,j} = \mathbf{t}_{i,j} - \Delta t \cdot \mu(\mathbf{v}_{i,j}),$$

   with $\mu$ being a world-space-to-texture-space-transform $\mu$.

2. A computer implemented method of graphic image data processing for visualization of flow phenomena, the method comprising:

   performing the visualization on a regular grid of indexed simulation points $\mathbf{x}_{i,j}$ in a world space;
   associating each simulation point with a texture coordinate $\mathbf{t}_{i,j}$ in a texture space of an advected texture $T$, which represent visual details;

wherein the calculating the visualization for a point **x** of a simulation domain, comprises:

calculating an interpolation of the texture coordinates $\mathbf{t}_{i,j}$ of the simulation points belonging to a cell of indexed simulation points $\mathbf{x}_{i,j}$, in which **x** is contained in, based on a world-space-to-texture-space-transform $\mu$;
sampling the texture T at the interpolated texture coordinates to obtain texture samples; and
blending the texture samples to a single value for the point x.

3. A computer implemented method of graphic image data processing for simulation and visualization of flow phenomena, wherein the steps of the method according to claim 1 and the method according to claim 2 are iterated using the same world space points $\mathbf{x}_{i,j}$, texture space points $\mathbf{t}_{i,j}$, and world-space-to-texture-space-transform $\mu$.

4. The method according to any one of claims 1 to claim 3,
wherein in order to transform points **x** in the world space to points t in the texture space, the texture T is assigned to the world space extent $L_T$, and the world-space-to-texture-space-transform is a linear map.

5. The method according to any one of claims 1 to 4, wherein the velocity field is stored or is defined as a function in the world space.

6. The method according to any one of claims 1 to 5, wherein in the simulation the movement in the texture space is adjusted by scales $s_{i,j}$ and after an advection step the new texture coordinate $\mathbf{t}'_{i,j}$ at $\mathbf{x}_{ij}$ is

$$\mathbf{t}'_{i,j} = \mathbf{t}_{i,j} - \Delta t \cdot s_{i,j}^{\text{tex}} \cdot \mu(\mathbf{v}_{i,j}),$$

wherein relative to the texture T scales by $s_{i,j}$ in world space corresponds to scaling in the texture space by

$$s_{i,j}^{\text{tex}} = \frac{1}{s_{i,j}}.$$

7. The method according to any one of claims 1 to 5, wherein in the simulation the movement in the texture space is adjusted by rotation angles $r_{i,j}$.

8. The method according to any one of claims 1 to 5, wherein in the simulation the movement in the texture space is adjusted by isotropic local strain $e_{i,j}$

9. The method according to any one of claims 6 to 8, insofar as dependent upon claim 2, wherein during the iteration updates for at least one of $s_{i,j}$, $r_{i,j}$, and $e_{i,j}$ are derived from the velocity field.

10. A data processing device comprising a processor configured to carry out the method of claim any one of claims 1 to 9.

11. A computer program comprising instructions which, when the program is executed by a computer, cause the computer to carry out the method of claim any one of claims 1 to 9.

12. A computer-readable medium comprising instructions which, when executed by a computer, cause the computer to carry out the method of claim any one of claims 1 to 9.

**Fig. 1**

**Fig. 2a**

**Fig. 2b**

Rendering

Advected texture

**Fig. 3**

300

301

**x**

**Fig. 4a**

$2\Delta x$

$2\Delta x$

$\mathbf{x}_{\mathbf{b(x)}+(0,1)}$

$\mathbf{x}_{\mathbf{b(x)}+(1,1)}$

$\mathbf{x}$

$\mathbf{x}_{\mathbf{b(x)}}$

$\mathbf{x}_{\mathbf{b(x)}+(1,0)}$

# Fig. 4b

Advected texture

## Fig. 5a

Rendering

$\mathbf{x}_{i,j+1}$     $\mathbf{x}_{i+1,j+1}$

$\mathbf{x}_{i,j}$     $\mathbf{x}_{i+1,j}$

## Fig. 5b

Advected texture

$\mathbf{t}_{i+1,j+1}$

$\mathbf{t}_{i,j+1}$

$\mathbf{t}_{i,j}$

$\mathbf{t}_{i+1,j}$

# Fig. 6

Initialize simulation data
**110**

**Fluid simulation** 120

| Decoupled texture particle positions $\mathbf{t}_{i,j}$ advection (Equation 9) **130** | Advect texture particle rotations $r_{i,j}$ (Using given simulation advection scheme) **140** | Advect texture particle strains $e_{i,j}$ (Using given simulation advection scheme) **150** | Additional application dependent data for rendering **160** |

Update texture particle rotations $r_{i,j}$ (Equation 12) **170**

Update texture particle strains $e_{i,j}$ (Equation 16) **180**

**Rendering** 190

Compute texture particle rotation matrices $\boldsymbol{R}_{i,j}^{\text{tex}}$ (Equation 8) **200**

Compute texture particle scales $s_{i,j}^{\text{tex}}$ (Equations 7 and 13) **210**

**Shading** 220

**Decoupled Texturing** 230

Continue simulation and rendering? **240**

Yes

No

End **250**

Europäisches
Patentamt

European
Patent Office

Office européen
des brevets

# EUROPEAN SEARCH REPORT

**Application Number**

EP 22 19 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIZHI YU ET AL: "Lagrangian Texture Advection: Preserving both Spectrum and Velocity Field", IEEE TRANSACTIONS ON VISUALIZATION AND COMPUTER GRAPHICS, IEEE, USA, vol. 17, no. 11, 1 November 2011 (2011-11-01), pages 1612-1623, XP011408811, ISSN: 1077-2626, DOI: 10.1109/TVCG.2010.263 * abstract * * section 3 OUR ALGORITHM; page 1613, column 2, line 13 – page 1618, column 1; figure 2 * ----- | 1-12 | INV. G06T13/80 G06T15/04 |
| A,D | MAX N ET AL: "FLOW VISUALIZATION USING MOVING TEXTURES", NASA CONFERENCE PUBLICATIONS, WASHINGTON,DC, US, 18 September 1995 (1995-09-18), pages 77-87, XP008014790, * page 81 – page 83 * ----- | 1-12 | |
| A,D | NEYRET F ED – SPENCER S N (ED): "ADVECTED TEXTURES", COMPUTER ANIMATION; [ACM SIGGRAPH SYMPOSIUM ON COMPUTER ANIMATION], EUROGRAPHICS ASSOCIATION, P. O. BOX 16 AIRE-LA-VILLE CH-1288 SWITZERLAND, 26 July 2003 (2003-07-26), pages 147-153, XP001233117, ISSN: 1727-5288 ISBN: 978-1-58113-659-3 * page 150 – page 151 * ----- -/-- | 1-12 | TECHNICAL FIELDS SEARCHED (IPC) G06T |

The present search report has been drawn up for all claims

| Place of search | Date of completion of the search | Examiner |
|---|---|---|
| The Hague | 8 February 2023 | Martos Riaño, Demian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 22 19 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | D. WEISKOPF, T. ERTL: "A Hybrid Physical/Device-Space Approach for Spatio-Temporally CoherentInteractive Texture Advection on Curved Surfaces", ACM, 2 PENN PLAZA, SUITE 701 – NEW YORK USA, 17 May 2004 (2004-05-17), – 17 May 2004 (2004-05-17), XP040005156, * Section 4; page 267 – page 268; figures 5, 6 * ----- | 1-12 | |

TECHNICAL FIELDS
SEARCHED        (IPC)

The present search report has been drawn up for all claims

| Place of search | Date of completion of the search | Examiner |
|---|---|---|
| The Hague | 8 February 2023 | Martos Riaño, Demian |

EPO FORM 1503 03.82 (P04C01)

EP 4 160 541 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **N. MAX ; B. BECKER.** Flow visualization using moving textures. *Proceedings of Symposium on Visualizing Time Varying Data,* 1996
- **F. NEYRET.** Advected Textures. *Proceedings of Symposium on Computer Animation,* 2003

- *IEEE Math Typesetting Guide,* 2020, http://journals.ieeeauthorcenter.ieee.org/wp-content/uploads/sites/7/IEEE-    Math-Typesetting-Guide.pdf